# EUROPÄISCHE PATENTSCHRIFT

(11) **EP 3 046 880 B1**
(45) Veröffentlichungstag und Bekanntmachung des Hinweises auf die Patenterteilung: **14.11.2018**
(21) Anmeldenummer: 14762002.5
(22) Anmeldetag: 11.09.2014
(51) Int. Cl.: C02F 3/10, C02F 103/44

(54) **TRÄGERVORRICHTUNG ZUM EINBAU IN EINEN BIOREAKTOR UND BIOREAKTOR SOWIE FAHRZEUGWASCHANLAGE EINE SOLCHE TRÄGERVORRICHTUNG AUFWEISEND**
SUBSTRATE DEVICE FOR INSTALLATION INTO A BIOREACTOR, AND BIOREACTOR AND VEHICLE WASHING INSTALLATION HAVING A SUBSTRATE DEVICE OF SAID TYPE
DISPOSITIF DE SUPPORT POUR L'INSERTION DANS UN BIORÉACTEUR, BIORÉACTEUR AINSI QU'INSTALLATION DE LAVAGE DE VÉHICULE COMPORTANT UN DISPOSITIF DE SUPPORT DE CE TYPE

(30) Priorität: 17.09.2013 DE 102013110205
(43) Veröffentlichungstag der Anmeldung: 27.07.2016
(73) Patentinhaber: Faritec GmbH & Co. KG, 55129 Mainz (DE)
(72) Erfinder: FARIWAR, Sasan Ahmad, 65193 Wiesbaden (DE)
(74) Vertreter: WSL Patentanwälte Partnerschaft mbB
(86) Internationale Anmeldenummer: PCT/EP2014/069356
(87) Internationale Veröffentlichungsnummer: WO 2015/039946

(56) Entgegenhaltungen:
- EP-A1- 1 710 142
- DE-A1- 2 355 344

## Beschreibung

Die vorliegende Erfindung betrifft einen Bioreaktor zum Abbauen von Schadstoffen in Abwässern mit einem Becken gebildet aus einem Boden und Seitenwänden, die teilweise schräg zur Schwerkraft angeordnet sind, wobei der Bioreaktor eine Trägervorrichtung mit einer Mehrzahl von in parallelen Ebenen angeordneten Wellplatten aufweist, wobei die Wellen und Täler benachbarter Wellplatten nicht-parallel zueinander verlaufen, die Trägervorrichtung von Abwasser durchströmbar und mit wenigstens einem Mikroorganismus animpfbar ist.

Zur Klärung von Abwässern aus der Industrie, von privaten Haushalten, aber auch von Handwerks- und Dienstleistungsunternehmen müssen diverse Schadstofftypen aus dem Abwasser entfernt werden. Dazu zählen vor allem Feststoffe, organisches Material und flüssige oder lösliche anorganische Verunreinigungen. Die organischen und gelösten oder flüssigen anorganischen Bestandteile sind die Ursache für einen chemischen Sauerstoffbedarf (CSB) des Abwassers.

Die oxidierbaren Schadstoffe werden üblicherweise in einem Bioreaktor oxidiert und damit aus dem Abwasser entfernt. Dies sind vor allem organische Bestandteile des Abwassers, die auch Ölrückstände und dergleichen kohlenstoffhaltige Anteile umfassen. In diesen Anteilen können auch organische Giftstoffe enthalten sein. Weitere Bestandteile, insbesondere gelöste anorganische Komponenten, können durch Fällungsreaktionen aus dem Abwasser entfernt werden.

Bioreaktoren, die mit Hilfe von Mikroorganismen den CSB von Abwasser verringern, sind nach dem Stand der Technik lange bekannt. Sie werden beispielsweise in konventionellen Kläranlagen eingesetzt.

Ein Beispiel findet sich in der europäischen Patentschrift EP 1 146 016, die einen zweistufigen Bioreaktor beschreibt. Jedoch wird lediglich allgemein angegeben, dass die Anlage beim Anfahren der Bioreaktoren mit adaptierten Mikroorganismen geimpft wird. Werden die zur Reinigung des Abwassers vorgesehenen Mikroorganismen lediglich dem Abwasser zugegeben, so wird ein Großteil der Mikroorganismen zusammen mit bereits behandelten Abwasser wieder aus dem Bioreaktor abgeführt. Vorgesehen ist daher eine Trägervorrichtung, die von dem Abwasser durchströmbar und mit wenigstens einem Mikroorganismus animpfbar ist. Allerdings sind vorbekannte Trägervorrichtungen weder strömungsoptimiert noch bieten diese ausreichend Platz für die Anlagerung von Mikroorganismen.

Die deutsche Patentanmeldung DE 23 55 344 betrifft eine Anlage zur biologischen Reinigung von Roh- und Abwasser mit einem in einem Gehäuse untergebrachten Bett aus dicht nebeneinander befindlichen dünnen Schichten, die Träger für Mikroorganismen sind und die durch Wellung oder Faltung durchlaufende Durchlässe bilden, durch die das von oben zugeführte Roh- oder Abwasser und Luft hindurchgehen.

Die europäische Patentanmeldung EP 1 710 142 A1 betrifft ein Wasserbehandlungssystem, ein Verfahren zur Herstellung der Wasserbehandlungsfähigkeit sowie ein Verfahren zur Regelung der Verwendung des wiedergewonnen Wassers. Das Wasserbehandlungssystem umfasst einen Bioreaktor, in dem Bakterien zur Aufreinigung von Abwasser angesiedelt werden.

Gegenüber diesem Stand der Technik liegt daher der vorliegenden Erfindung die Aufgabe zu Grunde, einen Bioreaktor mit einer Trägervorrichtung bereitzustellen, die von Abwasser durchströmbar und mit wenigstens einem Mikroorganismus animpfbar ist, wobei die Trägervorrichtung für das Durchströmen von Abwasser optimiert ist und ausreichend Platz zum Anlagern von Mikroorganismen bietet.

Erfindungsgemäß wird die Aufgabe durch einen Bioreaktor mit den eingangs genannten Merkmalen dadurch gelöst, dass unterhalb der Trägervorrichtung wenigstens ein Luftauslass angeordnet ist und ein Rahmengestell sowohl die Trägervorrichtung als auch den wenigstens einen Luftauslass trägt, wobei die Wellen und Täler benachbarter Wellplatten in einem Winkel von 45° zueinander verdreht angeordnet sind.

Die Trägervorrichtung dient der Vergrößerung der für den Besatz mit Mikroorganismen verfügbaren Fläche. Die Ausgestaltung der Trägervorrichtung in Form einer Mehrzahl von in parallelen Ebenen angeordneten Wellplatten, wobei die Wellen und Täler benachbarter Wellplatten nicht-parallel, d.h. unter einem relativen Winkel > 0°, zueinander verlaufen, hat den Vorteil, dass nur kleine Berührungsflächen zwischen den einzelnen Wellplatten entstehen können und so nur ein sehr geringer Anteil der Oberfläche der Wellplatten für den Besatz mit Mikroorganismen verloren geht. Zudem ist eine solche Trägervorrichtung gut durchströmbar, sodass das Abwasser ohne große hydraulische Verluste an dem Besatz mit Mikroorganismen vorbeigeführt werden kann. Außerdem ist eine derartige Trägervorrichtung einfach und kostengünstig herstellbar.

Im Sinne der vorliegenden Erfindung sind Wellplatten "benachbart", wenn diese unmittelbar nebeneinander, d.h. ohne eine weitere, dazwischen liegende Wellplatte, angeordnet sind. Das Material der Wellplatten kann Metall, wie etwa Edelstahl, ein Kunststoff oder ein keramisches oder ein anorganisches Material, wie etwa faserverstärkter Beton, sein. Wellplatten im Sinne der vorliegenden Erfindung zeichnen sich durch ein Querschnittsprofil mit abwechselnd aufeinanderfolgenden lokalen Maxima und Minima aus, wobei die Maxima als "Wellen" und die Minima als "Täler" bezeichnet werden. Platten mit einem sägezahnförmigen, rechteckigen und/oder zickzackförmigen Querschnittsprofil sind ebenso Wellplatten im Sinne der vorliegenden Erfindung wie solche mit einem abgerundeten, wellenförmigen Querschnittsprofil, die als bevorzugte Ausführungsform anzusehen sind.

Sind die Wellen und Täler benachbarter Wellplatten in einem Winkel von 45° zueinander verdreht angeordnet, kann das Abwasser besonders gut durch die Wellplatten strömen. Dabei können die Wellplatten, wie in einer weiteren Ausführungsform, mit Edelstahlbändern fixiert sein, sodass wenigstens ein Teil der Wellplatten, vorzugsweise fünf bis elf Wellplatten, zu einem Block zusammengefasst sind. Die Befestigung von mehreren Wellplatten mit Edelstahlbändern zu einem Block bietet den Vorteil, dass damit große Stapel von Wellplatten auf einfache Weise verbunden werden können. Wenn die Wellen und Täler der jeweils obersten und untersten Wellplatte eines solchen Stapels parallel verlaufen, können die Edelstahlbänder durch die Täler der Wellplatten geführt werden.

Einzelne Blöcke können so aus einem Bioreaktor entfernt, gewartet und wieder in den Bioreaktor eingebracht werden. Zweckmäßigerweise sind die Blöcke und/oder die einzelnen Wellplatten so bemessen, dass diese durch eine Revisionsöffnung nach DIN 4271 mit einem Durchmesser von 600 mm passen. Die Trägervorrichtung kann so beispielsweise auch in bereits vorhandene, unterirdische Bioreaktoren eingebaut werden, die eine solche Revisionsöffnung besitzen.

In einer Ausführungsform sind die Wellplatten gestapelt. Die Ausbildung der Trägervorrichtung als Wellplattenstapel hat den Vorteil, dass diese stabil und kompakt, also mit wenig Platzverlust, in einem Bioreaktor angeordnet werden können.

In noch einer weiteren Ausführungsform sind die Wellplatten horizontal angeordnet und mit einer Vielzahl von Bohrungen oder Durchbrechungen versehen, sodass durch diese Gas und/oder Flüssigkeit hindurchtreten kann. Auch dies verbessert die Durchströmbarkeit der Trägervorrichtung.

In einer weiteren Ausführungsform weisen die Wellplatten ein wellenförmiges Querschnittsprofil auf, wobei der mittlere Scheitelradius der Wellen und Täler zwischen 5 mm und 300 mm, vorzugsweise zwischen 10 mm und 100 mm und besonders bevorzugt zwischen 20 mm bis 25 mm beträgt. Der mittlere Scheitelradius der Wellen und Täler legt die Berührungsflächen zwischen Wellen und Tälern benachbarter Wellplatten fest. Wie zuvor ausgeführt, sollte die Kontaktfläche zwischen den Wellen und Tälern benachbarter Wellplatten möglichst gering sein, um ausreichend Platz zum Anlagern von Mikroorganismen bereitzustellen. Zugleich sollte die Kontaktfläche zwischen benachbarten Wellplatten aber auch so groß sein, dass benachbarte Wellplatten sich gegenseitig stabil abstützen können. Haben die Wellen und Täler insbesondere einen mittleren Scheitelradius zwischen 20 mm bis 25 mm ist ausreichend Platz zum Anlagern der Mikroorganismen und es sind auch ausreichend große Kontaktflächen für das Abstützen benachbarter Wellplatten vorhanden.

In einer alternativen Ausführungsform ist die Trägervorrichtung so angeordnet, dass die Wellplatten vertikal ausgerichtet sind. Dies verbessert den hydraulischen Widerstand gegenüber vertikaler Durchströmung im Vergleich zu der Ausführungsform, in der die Wellplatten horizontal angeordnet sind.

Versuche haben gezeigt, dass sich trotz des Animpfens mit jeweils den gleichen Mikroorganismen in einem gewissen Zeitraum nach dem Animpfen eine für das jeweils eingeleitete Abwasser optimale Population von Mikroorganismen ausbildet, die den unterschiedlichen Bedingungen bzw. Schadstoffzusammensetzungen und -mengen im Abwasser angepasst ist. Es findet dabei eine selbsttätige Adaption der Mikroorganismen an das jeweilige Abwasser statt, und es kann sich ein entsprechendes Milieu selbsttätig ausbilden, in dem jeweils bestimmte Schadstofftypen besonders gut abgebaut werden. Dabei kann sich, bezogen auf die Gesamtpopulation, sowohl eine genetische Veränderung der einzelnen Stämme von Mikroorganismen entwickeln als auch, insbesondere bei Animpfen mit jeweils einer identischen Mischung, eine Bevorzugung derjenigen Stämme, die mit dem jeweiligen Milieu am besten zurechtkommen, sodass diese nach wenigen Generationszyklen einen höheren bzw. dominierenden Anteil der Population bilden. Die Reinigungsleistung wird dadurch ohne größeren Aufwand und ohne Auswahl speziell adaptierter Mikroorganismen optimiert.

Unter der Trägervorrichtung ist wenigstens ein Luftauslass in dem Bioreaktor angeordnet. Bei einem solchen Bioreaktor handelt es sich um einen Festbettreaktor, in dem die Bewegung durch das Aufsteigen des Luftstroms eingebracht wird. Ein solcher Reaktor ist für die Abwasserreinigung sehr effektiv, da viel Sauerstoff zur Oxidation der organischen Bestandteile des Abwassers eingebracht wird. Gerade durch das Einbringen und Aufsteigen des Luftstroms ist es erforderlich, dass für die Mikroorganismen ausreichend Fläche zum Anlagern bereitgestellt wird, da ansonsten übermäßig viele Mikroorganismen mit dem abfließenden Abwasser aus dem Bioreaktor entfernt werden.

Das Rahmengestell trägt sowohl die Trägervorrichtung als auch den wenigstens einen Luftauslass. Dieser Aufbau ist besonders einfach und effizient, und ermöglicht außerdem, unter dem Bioreaktor einen Schlammkoffer anzuordnen, in dem sich abgestorbene Mikroorganismen sammeln können. Die gleichzeitige Anbringung des wenigstens einen Luftauslasses an dem Rahmen vereinfacht den Aufbau und die Herstellung des Bioreaktors. Der Schlammkoffer kann auch eine Vertiefung im Boden des Bioreaktors sein, wobei die Trägervorrichtung über der Vertiefung angeordnet ist.

Auf diese Weise wird ein Schlammfang realisiert, der durch die konische Konstruktion des Beckenbodens den Schlamm durch die Schwerkraft und Bewegung des Wassers selbsttätig in der Vertiefung konzentriert. Auf diese Weise wird ein einfaches Abpumpen des anfallenden Schlammes aus der Vertiefung ermöglicht.

In einer Ausführungsform ist der Trägervorrichtung wenigstens ein Schlammfang vorgeschaltet. Durch den vorgeschalteten Schlammfang kann das Abwasser vor dem Durchströmen der Trägervorrichtung grob von Schlamm gereinigt werden, sodass sich an der Trägervorrichtung weniger Schlamm ansammelt, der die Trägervorrichtung verstopfen könnte. Da zu viel angesammelter Schlamm außerdem die darunter befindlichen Mikroorganismen von der Sauerstoffzufuhr abschneidet, verhindert der vorgeschaltete Schlammfang auch ein übermäßiges Absterben von Mikroorganismen.

In einer Ausführungsform ist der Trägervorrichtung eine Reinigungsstufe nachgeschaltet, die mit Adsorptions-Säulen-Chromatographie arbeitet. Mit dieser zusätzlichen Stufe können Verschmutzungen bis zu einer Größe von 100 µm filtriert werden. Zusätzlich hat die Adsorptions-Säulen-Chromatographie eine Biofilterfunktion und einen Adsorptionseffekt gegenüber organischen Verunreinigungen.

In einer Ausführungsform ist eine Rückführungseinrichtung vorgesehen, die Schlamm aus dem Bioreaktor und/oder Schlamm aus der Reinigungsstufe, die mit Adsorptions-Säulen-Chromatographie arbeitet, in den wenigstens einen vorgeschalteten Schlammfang zurückführt. Durch die Rückführung von Schlamm aus dem Bioreaktor an einer Stelle, an der das dem Bioreaktor zugeführte Abwasser vorbeiströmt, werden dem Bioreaktor durch den Schlamm mitgerissene Bakterien wiederzugeführt.

In einer Ausführungsform der Erfindung ist eine Fahrzeugwaschanlage mit einem Bioreaktor nach der Erfindung versehen.

Gemäß der Erfindung wird außerdem ein Verfahren zur biologischen Behandlung von Abwässern vorgeschlagen, bei dem im Betrieb Abwasser eine mit wenigstens einem Mikroorganismus angeimpfte Trägervorrichtung gemäß der vorliegenden Erfindung durchströmt, wobei die Trägervorrichtung Teil eines Bioreaktors gemäß der vorliegenden Erfindung ist.

Weitere Vorteile, Merkmale und Anwendungsmöglichkeiten der Erfindung ergeben sich sowohl aus der folgenden Beschreibung bevorzugter Ausführungsformen als auch aus den zugehörigen Figuren. Es zeigen:
- Figur 1: eine schematische Darstellung eines Bioreaktors nach der Erfindung, und
- Figur 2: eine schematische Darstellung zweier benachbarter Wellplatten gemäß einer erfindungsgemäßen Trägervorrichtung.

Der Bioreaktor 2 umfasst einen Behälter gebildet aus einem Boden 6 und teilweise schräg zur Schwerkraft angeordneten Seitenwänden 7. Der Boden 6 des Behälters ist konisch ausgeführt, sodass Schlamm, der sich darauf absetzt, durch die Schwerkraft und die Wasserbewegung zur Mitte hin befördert wird. In der Mitte des Bodens 6 ist eine Vertiefung 8 angeordnet, in der sich anfallender Schlamm ansammelt. Der Zulauf zu einer Schlammpumpe 11 ist in der Vertiefung 8 angeordnet, sodass Schlamm von der Schlammpumpe 11 angesaugt werden kann. Der Schlamm wird durch eine Schlammabführleitung 12 aus dem Bioreaktor 2 abgeleitet und kann von einem Fachunternehmen entsorgt werden.

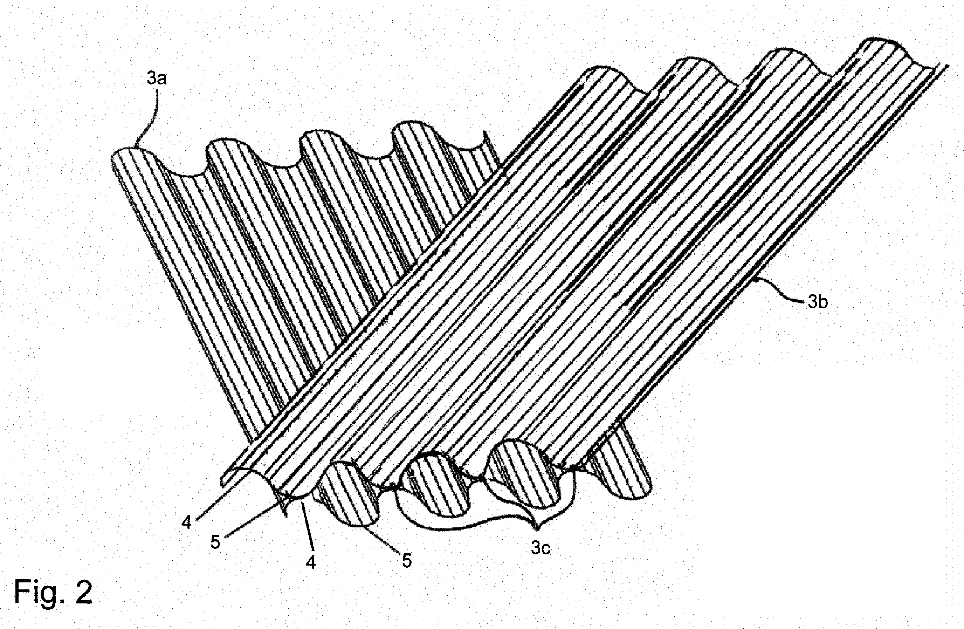

In dem Behälter des Bioreaktors 2 ist auf einem Rahmengestell 9 die Trägervorrichtung 1 angeordnet, die einen Stapel Wellplatten 3 aufweist. Die Trägervorrichtung 1 vergrößert die Oberfläche im Inneren des Bioreaktors 2, auf der sich Mikroorganismen ansiedeln können. Die Wellplatten 3 haben ein wellenförmiges Querschnittsprofil und sind in parallelen Ebenen angeordnet, wobei Wellen 4 und Täler 5 benachbarter Wellplatten 3 nicht-parallel zueinander verlaufen. Weitere Merkmale der Wellplatten 3 und der Trägervorrichtung 1 sind im Zusammenhang mit zwei exemplarisch in der Figur 2 dargestellten Wellplatten 3a, 3b beschrieben.

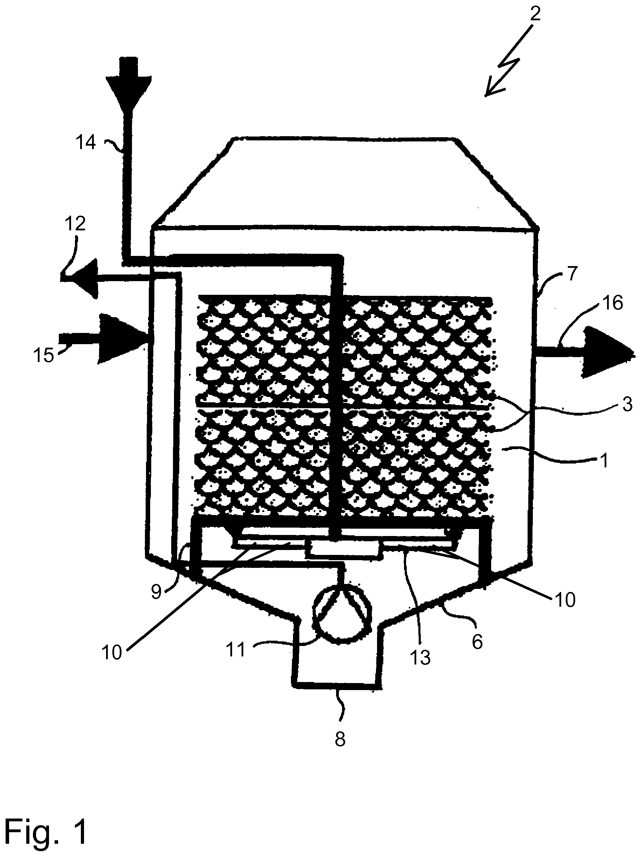

Die Wellplatte 3b liegt auf der Wellplatte 3a auf, wobei die Orientierungsrichtung von Wellen 4 und Tälern 5 der Wellplatte 3a zu den Wellen 4 und Tälern 5 der Wellplatte 3b um etwa 45° verdreht ist. Der mittlere Scheitelradius der Wellen 4 und Täler 5 beträgt zwischen 20 mm und 25 mm. Die Wellplatten 3a, 3b liegen daher nur an einzelnen Berührungspunkten aufeinander auf, die durch schwarze Punkte 3c markiert sind. Wird auf der Wellplatte 3b wiederum eine weitere Wellplatte mit der gleichen Orientierung der Wellen 4 und Täler 5 wie die der Wellplatte 3a gestapelt und darauf wiederum eine weitere Wellplatte mit der Orientierung der Wellen 4 und Täler 5 der Wellplatte 3b und im Wechsel so weiter, so entsteht eine Trägervorrichtung 1 mit einem Stapel aus Wellplatten 3, die für den Einsatz in einem Bioreaktor 2 nach der Erfindung gut geeignet ist und wie sie in Figur 1 gezeigt ist.

An dem Rahmengestell 9 ist außerdem gemäß Figur 1 ein Belüftungsbalken 13 befestigt, der eine Vielzahl von Luftauslässen 10 aufweist, wobei lediglich einige wenige in der Figur 1 angedeutet sind. Der Belüftungsbalken 13 ist mittig unter der Trägervorrichtung 1 angeordnet und an eine Luftzuführungsleitung 14 angeschlossen. In die Luftzuführungsleitung 14 wird Druckluft eingeleitet, die aus den Luftauslässen 10 in dem Belüftungsbalken 13 austritt und die Trägervorrichtung 1 durchlüftet, sodass darauf siedelnde Mikroorganismen belebt werden. Die Bewegung der Luft führt außerdem zu einer Kreislaufbewegung des Abwassers, wobei Abwasser von der aus dem Belüftungsbalken 13 austretenden Luft mitgerissen und durch die Trägervorrichtung 1 geführt wird. Dadurch wird oberhalb der Trägervorrichtung 1 Abwasser verdrängt, strömt an der Wand des Behälters wieder nach unten und wird erneut von Luft mitgerissen, die aus dem Belüftungsbalken 13 austritt. Der Behälter weist in einem oberen Abschnitt einen Austritt für Luft und bei biologischen Reaktionen entstehende Gase auf. Der Bioreaktor 2 wird durch einen Zulauf 15 mit Abwasser versorgt und weist einen Ablauf 16 auf, durch den behandeltes Wasser aus dem Bioreaktor 2 austreten kann.

Für Zwecke der ursprünglichen Offenbarung wird darauf hingewiesen, dass sämtliche Merkmale, wie sie sich aus der vorliegenden Beschreibung, den Zeichnungen und den abhängigen Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen und die Betonung der Unabhängigkeit der einzelnen Merkmale voneinander wird hier nur der Kürze und der Lesbarkeit der Beschreibung wegen verzichtet.

### Bezugszeichenliste:

- 1: Trägervorrichtung
- 2: Bioreaktor
- 3, 3a, 3b: Wellplatten
- 3c: Berührungspunkt
- 4: Welle
- 5: Tal
- 6: Boden
- 7: Seitenwand
- 8: Vertiefung
- 9: Rahmengestell
- 10: Luftauslass
- 11: Schlammpumpe
- 12: Schlammabführleitung
- 13: Belüftungsbalken
- 14: Luftzuführungsleitung
- 15: Zulauf
- 16: Ablauf

## Patentansprüche

1. Bioreaktor (2) zum Abbau von Schadstoffen in Abwässern mit einem Becken gebildet aus einem Boden (6) und Seitenwänden (7), die wenigstens teilweise schräg zur Schwerkraft angeordnet sind, wobei der Bioreaktor (2) eine Trägervorrichtung (1) mit einer Mehrzahl von in parallelen Ebenen angeordneten Wellplatten (3) aufweist, wobei die Wellen (4) und Täler (5) benachbarter Wellplatten (3) nicht-parallel zueinander verlaufen, die Trägervorrichtung (1) von Abwasser durchströmbar und mit wenigstens einem Mikroorganismus animpfbar ist, **dadurch gekennzeichnet, dass** unterhalb der Trägervorrichtung (1) wenigstens ein Luftauslass (10) angeordnet ist und ein Rahmengestell (9) sowohl die Trägervorrichtung (1) als auch den wenigstens einen Luftauslass (10) trägt, wobei die Wellen (4) und Täler (5) benachbarter Wellplatten (3) in einem Winkel von 45° zueinander verdreht angeordnet sind.

2. Bioreaktor (2) nach Anspruch 1, **dadurch gekennzeichnet, dass** die Trägervorrichtung (1) über einer Vertiefung (8) in dem Boden (6) des Bioreaktors (2) angeordnet ist.

3. Bioreaktor (2) nach Anspruch 1 oder 2, **dadurch gekennzeichnet, dass** der Trägervorrichtung (1) wenigstens ein Schlammfang vorgeschaltet ist.

4. Bioreaktor (2) nach einem der Ansprüche 1 bis 3, **dadurch gekennzeichnet, dass** der Trägervorrichtung (1) eine Reinigungsstufe nachgeschaltet ist, die mit Adsorptions-Säulen-Chromatographie arbeitet.

5. Bioreaktor (2) nach einem der Ansprüche 1 bis 4, **dadurch gekennzeichnet, dass** wenigstens ein Teil der Wellplatten (3) der Trägervorrichtung (1), vorzugsweise fünf bis elf Wellplatten (3), durch Edelstahlbänder zu einem Block zusammengefasst sind.

6. Bioreaktor (2) nach einem der Ansprüche 1 bis 5, **dadurch gekennzeichnet, dass** die Wellplatten (3) der Trägervorrichtung (1) gestapelt sind.

7. Bioreaktor (2) nach einem der Ansprüche 1 bis 6, **dadurch gekennzeichnet, dass** die Wellplatten (3) der Trägervorrichtung (1) ein abgerundetes, wellenförmiges Querschnittsprofil aufweisen, wobei der mittlere Scheitelradius der Wellen (4) und Täler (5) zwischen 5 mm und 300 mm, vorzugsweise zwischen 10 mm und 100 mm und besonders bevorzugt zwischen 20 mm bis 25 mm beträgt.

8. Fahrzeugwaschanlage mit einem Bioreaktor (2) nach einem der vorangehenden Ansprüche.

9. Verfahren zur biologischen Behandlung von Abwässern, bei dem im Betrieb Abwasser eine mit wenigstens einem Mikroorganismus angeimpfte Trägervorrichtung (1) durchströmt, **dadurch gekennzeichnet, dass** die Trägervorrichtung (1) Teil eines Bioreaktors gemäß einem der Ansprüche 1 bis 7 ist.

## Claims

1. Bioreactor (2) for degradation of harmful substances in waste waters with a tank formed from a bottom (6) and side walls (7), which are arranged at least partially inclined with respect to the force of gravity, wherein the bioreactor (2) comprises a carrying device (1) with a plurality of corrugated sheets (3) arranged in parallel planes, wherein the waves (4) and the valleys (5) of adjacent corrugated sheets (3) are not parallel to each other, the carrying device (1) can be flown through by waste water and can be inoculated with at least one microorganism, **characterized in that** underneath the carrying device (1) at least one air outlet (10) is arranged and a rack (9) carries the carrying device (1) as well as the at least one air outlet (10), wherein the waves (4) and the valleys (5) of adjacent corrugated sheets (3) are arranged turned relative to each other at an angle of 45°.

2. Bioreactor (2) according to claim 1, **characterized in that** the carrying device (1) is arranged above an indentation (8) in the bottom (6) of the bioreactor (2).

3. Bioreactor (2) according to claim 1 or 2, **characterized in that** at least one sludge trap is arranged upstream of the carrying device (1).

4. Bioreactor (2) according to one of claims 1 to 3, **characterized in that** a cleaning step is arranged downstream of the carrying device (1), which runs with adsorption column chromatography.

5. Bioreactor (2) according to one of claims 1 to 4, **characterized in that** at least a part of the corrugated sheets (3) of the carrying device (1), preferably five to eleven corrugated sheets (3), are cumulated by stainless steel straps to form a block.

6. Bioreactor (2) according to one of claims 1 to 5, **characterized in that** the corrugated sheets (3) of the carrying device (1) are stacked.

7. Bioreactor (2) according to one of claims 1 to 6, **characterized in that** the corrugated sheets (3) of the carrying device (1) have a rounded, wavelike cross-sectional profile, wherein the average vertex radius of the waves (4) and the valleys (5) is between 5 mm and 300 mm, preferably between 10 mm and 100 mm and particularly preferably between 20 mm and 25 mm.

8. Vehicle wash site with a bioreactor (2) according to one of the preceding claims.

9. Method for the biological treatment of waste waters, wherein during operation waste water flows through a carrying device (1) being inoculated with at least one microorganism, **characterized in that** the carrying device (1) is part of a bioreactor according to one of claims 1 to 7.

## Revendications

1. Bioréacteur (2) pour la dégradation de contaminants d'eaux usées dans un bassin formé d'un fond (6) et de parois latérales (7) qui sont disposées au moins partiellement en oblique par rapport à la gravité, le bioréacteur (2) comprenant un dispositif de support (1) avec une pluralité de plaques ondulées (3) disposées dans des plans parallèles, les ondes (4) et les creux (5) de plaques ondulées (3) avoisinants s'étendant de façon non parallèle les uns par rapport aux autres, le dispositif de support (1) pouvant être traversé par de l'eau usée et inoculé avec au moins un microorganisme, **caractérisé en ce qu'**au moins une sortie d'air (10) est disposée en dessous du dispositif de support (1) et un châssis (9) porte aussi bien le dispositif de support (1) que ladite au moins une sortie d'air (10), les ondes (4) et creux (5) de plaques ondulées (3) avoisinantes étant décalés angulairement les uns par rapport aux autres d'un angle de 45°.

2. Bioréacteur (2) selon la revendication 1, **caractérisé en ce que** le dispositif de support (1) est disposé au-dessus d'un enfoncement (8) dans le fond (6) du bioréacteur (2).

3. Bioréacteur (2) selon la revendication 1 ou 2, **caractérisé en ce qu'**au moins un collecteur de boue est disposé en amont du dispositif de support (1).

4. Bioréacteur (2) selon l'une des revendications 1 à 3, **caractérisé en ce qu'**un étage de nettoyage est disposé en aval du dispositif de support (1), lequel fonctionne avec chromatographie d'adsorption sur colonne.

5. Bioréacteur (2) selon l'une des revendications 1 à 4, **caractérisé en ce qu'**au moins une partie des plaques ondulées (3) du dispositif de support (1), de préférence cinq à onze plaques ondulées (3), sont réunies en un bloc par des bandes en acier inoxydable.

6. Bioréacteur (2) selon l'une des revendications 1 à 5, **caractérisé en ce que** les plaques ondulées (3) du dispositif de support (1) sont empilées.

7. Bioréacteur (2) selon l'une des revendications 1 à 6, **caractérisé en ce que** les plaques ondulées (3) du dispositif de support (1) ont, en coupe transversale, un profil arrondi ondulé, le rayon de crête des ondes (4) et des creux (5) étant entre 5 mm et 300 mm, de préférence entre 10 mm et 100 mm et de manière particulièrement préférée entre 20 mm et 25 mm.

8. Installation de lavage de véhicule avec un bioréacteur (2) selon l'une des revendications précédentes.

9. Procédé de traitement biologique d'eaux usées, selon lequel de l'eau usée traverse un dispositif de support (1) inoculé avec au moins un microorganisme, **caractérisé en ce que** le dispositif de support (1) est une partie d'un bioréacteur selon l'une des revendications 1 à 7.
